# EUROPEAN PATENT SPECIFICATION

(11) **EP 2 135 152 B1**
(45) Date of publication and mention of the grant of the patent: **14.05.2014**
(21) Application number: 08737757.8
(22) Date of filing: 07.04.2008
(51) Int. Cl.: G06F 3/01

(54) **Feedback on input actuator**
Rückmeldung zu einer eingabe
Retour d'informations sur actionneur d'entrée

(30) Priority: 11.04.2007 US 786680
(43) Date of publication of application: 23.12.2009
(73) Proprietor: Uniforce Tech L.L.C., Dover DE 19904 (US)
(72) Inventor: TAKALA, Roope T., FI-02130 Espoo (FI); NEWMAN, Rhys, Woodland Hills, California 91364 (US); SLEIGHT, Rachael, London Newington SE17 1HB (GB); PARK, Maree, Calabasas, CA 91302 (US); GARTRELL, Andrew, Tarzana, California 91356 (US)
(74) Representative: Small, Gary James
(86) International application number: PCT/IB2008/051320
(87) International publication number: WO 2008/126006

(56) References cited:
- US-A1- 2001 035 854
- US-A1- 2005 139 457
- US-B1- 6 218 966
- US-B1- 6 259 044

## Description

### BACKGROUND OF THE INVENTION

### Field of the Invention

The invention relates to a user interface and, more particularly, to a user interface which uses haptics.

### Brief Description of Prior Developments

Haptics combine robotics and the physiology of touch for greater realism, interactivity, accuracy, and performance. U.S. Patent Application Publication No. 2001/0035854 A1 discloses use of a haptic feedback for touchpads and other touch controls. Haptics with physical feedback have been studied and implemented to high end gaming devices, virtual hand 3D modeling software, and automotive industry and remote control devices for the home (e.g. Sony NAVITUS™). Previously, haptic systems have been hidden in the device resulting in a need for a larger device volume to cover the system. US 6,281,966 B1 relates to a tactile feedback keyboard.

Tactile cues of pressing the keys have been implemented with domes or in the case of virtual keys on a touch screen with sound and graphical cues. Sony NAVITUS(TM) has used a piezo element to move the touch screen to give a tactile cue. This, however, has only been a single pulse. Touch screens can also be expensive and prone to damage when used in a hand-held portable device.

There is a desire to provide a new type of input system which can use haptics for signaling location of a user depressible input actuator on an electronic device without necessarily using a touch screen. There is also a desire to provide a haptics signaling system for a user input which uses a profiled or textured tactile element and/or a vibratory tactile element.

### SUMMARY OF THE INVENTION

Aspects of the invention are provided in the appended claims.

### BRIEF DESCRIPTION OF THE DRAWINGS

The foregoing aspects and other features of the invention are explained in the following description, taken in connection with the accompanying drawings, wherein:
FIG. 1 is a perspective view of a device comprising features of the invention;
FIG. 2 is a front view of the device shown in FIG. 1;
FIG. 3 is a cross sectional view of portions of the device shown in FIGS. 1 and 2;
FIG. 4 is cross sectional view of portions of a variation of the device shown in FIGS. 1 and 2;
FIG. 5 is a block diagram of components of the device shown in FIGS. 1 and 2;
Fig. 6 is cross sectional view of portions of another variation of the device shown in Figs. 1 and 2;
Fig. 7 is a block diagram of a variation of the components of the device shown in Figs. 1 and 2;
Figs. 8-12 show variations of the keypad section of the cover of the device shown in Figs. 1 and 2;
Figs. 13-14 show variations of the navigation control section of the cover of the device shown in Figs. 1 and 2;
Figs. 15-16 show variations of the power key section of the cover of the device shown in Figs. 1 and 2;
Figs. 17-27 show variations of the volume and/or zoom control section of the cover of the device shown in Figs. 1 and 2;
Figs. 28-29 are schematic cross sectional views of one type of mounting of components of an alternate embodiment of the invention;
Fig. 30 is a front side perspective view of a main section of an alternate embodiment of the invention;
Fig. 31 is a front side perspective view of a cover for attachment to the main section shown in Fig. 30; and
Fig. 32 is a rear side perspective view of the main section and cover shown in Figs. 30 and 31, respectively, attached to each other.

### DETAILED DESCRIPTION OF THE PREFERRED EMBODIMENTS

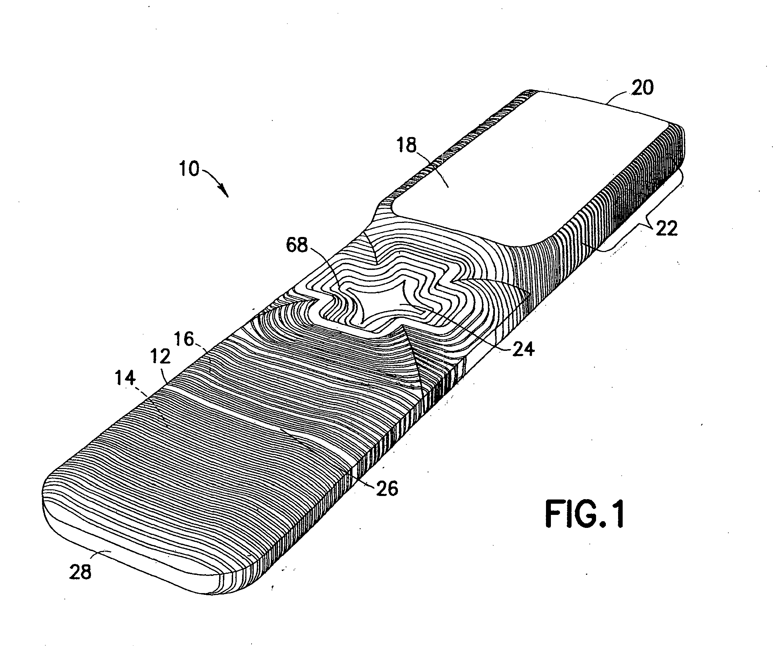

Referring to Fig. 1, there is shown a perspective view of a hand-held portable electronic device 10 incorporating features of the invention. Although the invention will be described with reference to the exemplary embodiments shown in the drawings, it should be understood that the invention can be embodied in many alternate forms of embodiments. In addition, any suitable size, shape or type of elements or materials could be used.

The device 10 in this embodiment is a mobile telephone. However, features of the invention could be used in any suitable type of user input section of a device including, for example, hand-held portable electronic device such as a music player, a digital camera, a PDA, an Internet browser, a gaming handset, or even with non-portable electronic devices such as a user input of a keypad of a larger electronic device or an industrial tool for example. The mobile telephone 10 can include applications other than a telephone application including, for example, a music player application, a digital camera application, an Internet browser application, and/or a gaming application.

In the embodiment shown in Fig. 1, the mobile telephone 10 is a block type of handset wherein the display does not move relative to the keypad. However, features of the invention could be used in other types of handset designs including a flip-type handset or a slide-type handset. The mobile telephone 10 generally comprises a housing 12, electronic circuitry 14 inside the housing, a rechargeable battery 16 inside the housing, and a display 18 operably connected to the electronic circuitry and mounted to the housing. The electronic circuitry 14 generally comprises a controller, such as a microprocessor for example, a memory, a transceiver, and an antenna. However, any suitable type of electronic circuitry could be provided.

The electronic circuitry 14 and the housing 12 combine to form user input sections for various features of the telephone 10. In this embodiment the user input sections include a power key feature 20, a volume and/or zoom control feature 22, a navigation and function key feature 24, and an alphanumeric keypad feature 26. More or less user input sections could be provided. In this embodiment, all of these user input sections are adapted to be actuated by depressing a portion of the housing 12 inward to actuate the user input section. However, in alternate embodiments one or more of these user input sections might not be user depressible, or might not have a portion of the housing forming that specific user input section.

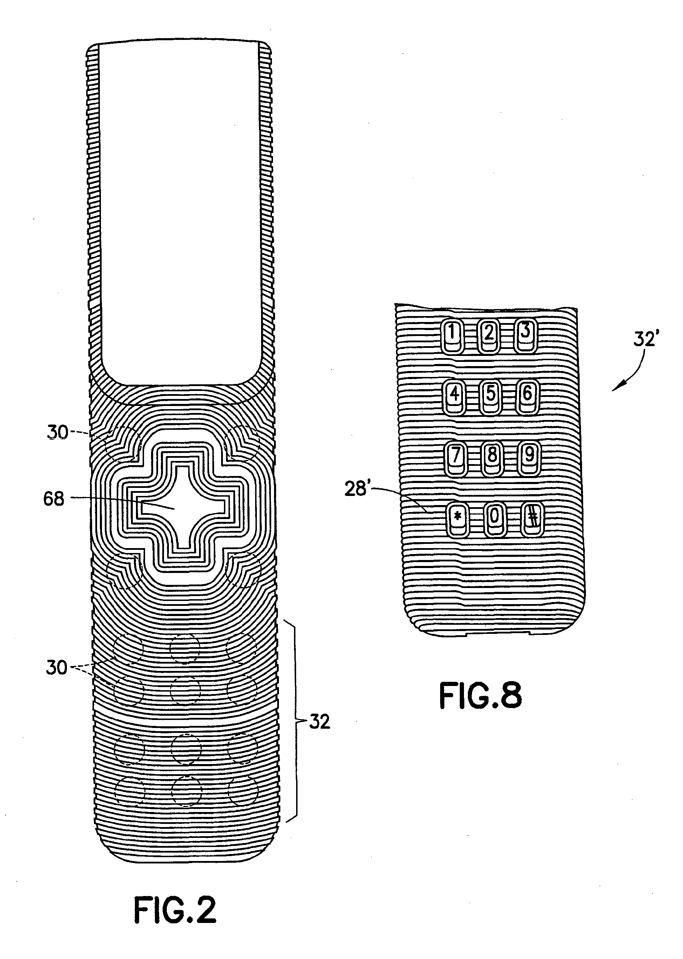

Referring also to Fig. 2, the housing 12 includes an outer cover 28 which comprises a resilient polymer material. The cover 28 has ridges and grooves along its exterior surface. These ridges and grooves form two main purposes: to provide a visual aesthetic design to the exterior of the telephone 10, and to provide a tactile sensation to a user's finger when touched by the user. In an alternate embodiment, some or all of the ridges and grooves might be so small that they may not always be directly visible. As can be seen, in this embodiment, in some areas the ridges and grooves are uniform, and in other areas the ridges and grooves are not uniform, but instead have a patterned shape. Patterning of the ridges and grooves could be designed to provide any suitable pattern of ridges and grooves (or the exterior surface of the cover being otherwise textured and/or shaped) so long as the features of the invention can be employed. The cover 28 forms a majority of the exterior surface of the telephone. In a preferred embodiment the cover 28 is a one piece member. However, in alternate embodiments, the cover 28 could comprise multiple members; perhaps integrally joined to each other for example.

The alphanumeric keypad feature 26 generally comprises twelve input sensors 30 located beneath the keypad section 32 of the cover 28. This generally corresponds to an ITU-T (International Telecommunication Union-Telecommunication Standardization Sector) keypad for phone dialing. An ITU-T keypad has a keypad layout utilizing twelve keys. The ITU-T keypad associates letters of the alphabet with the numbers on the keys of the keypad. By example, the number "2" key carries the letters ABC, the number "3" key carries the letters DEF, etc., as is well known. Other types of letter to number arrangements used in key layouts include those disclosed in U.S. Patent Application Publication No. 2006/0103623.

In an alternate embodiment, the sensors might not necessarily be discrete.

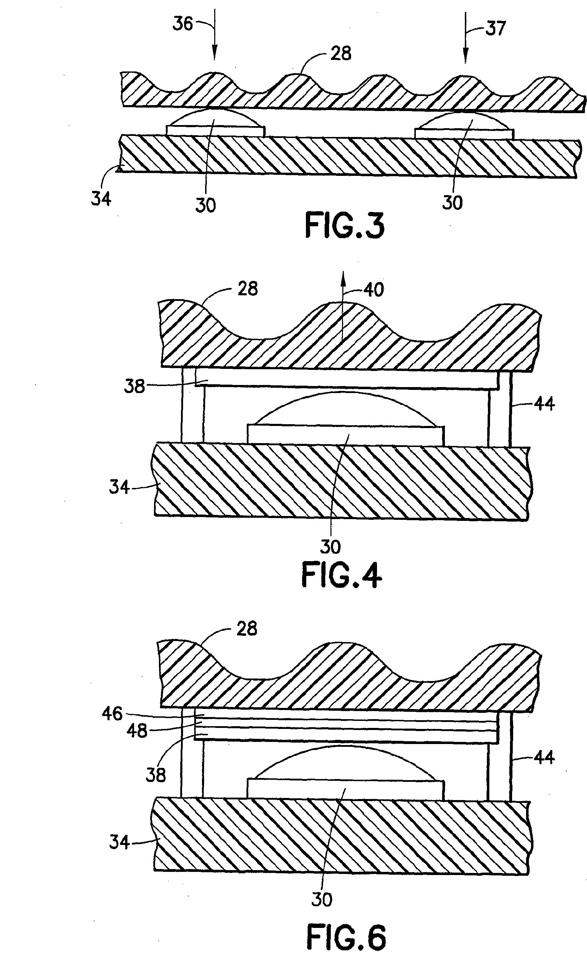

Referring also to Fig. 3, in this embodiment the input sensors 30 comprise resiliently depressible dome sensors on a printed circuit board 34. However, any suitable user input sensors could be provided. The cover 28 can be depressed by a user's finger as indicated by arrows 36, 37 to actuate the sensors 30. When depressed, a signal is sent to the controller. Thus, signals corresponding to numbers and/or letters and/or symbols can be input into the telephone 10. The cover 28 and the dome sensors 30 can resilient deflect back to their home positions after being released by the user. The input actuator could comprise a keypad mat having depressible domes, wherein the textured surface could comprise a plurality of distinct textured surfaces over respective ones of the domes.

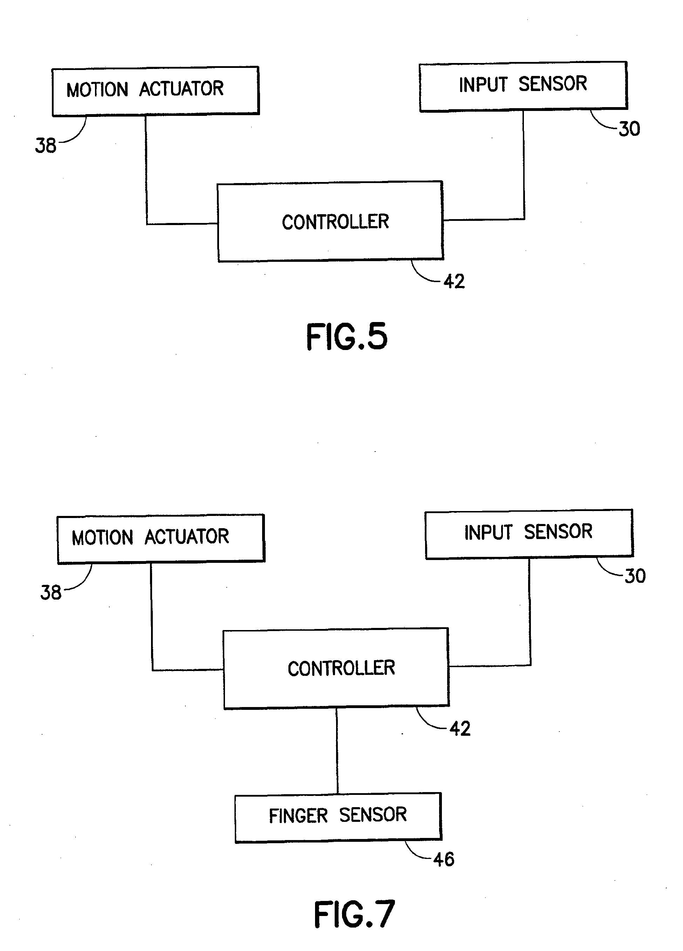

Referring also to Figs. 4 and 5, the input section can comprise at least one motion actuator 38. In a preferred embodiment one motion actuator 38 is provided for each input sensor 30. The motion actuator 38 is operably coupled to the controller 42. In this embodiment the motion actuator 38 comprises a piezo actuator which is adapted to bulge outward in direction 40 when energized. However, in alternate embodiments, any suitable type of motion actuator for moving portions of the cover 28 could be provided. The piezo actuator 38 is mounted to a frame 44 to support the actuator above the input sensor 30 and below the cover 28. Thus, when the piezo actuator 38 is energized, it is adapted to move the portion of the cover 28 above the input sensor 30 upward or outward. When de-energized the cover 28 and the actuator 38 can return to their home positions shown in Fig. 4. In a preferred embodiment, the controller 42 is adapted to repeatedly actuate and de-actuate the motion actuator 38 to provide a vibratory motion of the portion of the cover 28 directly above the input sensor 30. The controller 42 could be adapted to repeatedly actuate and de-actuate the motion actuator 38 to provide a constant vibratory motion or a varying vibratory motion.

Preferably the controller 42 only actuates and de-actuates the motion actuator 38 based upon a predetermined event. For example, the predetermined event could be an event in an application software. Preferably, however, the predetermined event comprises a signal from a sensor. More specifically, and referring also to Figs. 6 and 7, the telephone 10 can comprise one or more finger sensors 46.

In a preferred embodiment one finger sensor 46 is provided for each motion actuator 38. The finger sensor 46 is operably coupled to the controller 42. In this embodiment the finger sensor 46 comprises a capacitive sensor which is adapted to sense the presence of a user's finger directly above the sensor 46 at the portion of the cover 28 above the input sensor 30. However, in alternate embodiments, any suitable type of finger sensor for sensing the presence of a user's finger on the cover 28 could be provided. The finger sensor 46 is mounted to the frame 44 directly below the cover 28 and spaced from the motion actuator 38 by an electrical insulator 48.

When the finger sensor 46 senses the presence of the user's finger on the cover 28 above the actuator 38, the sensor 46 is adapted to send a signal to the controller 42. The controller, in turn, is adapted to actuate the motion actuator 38. The user can feel the motion of the cover at that limited location with the user's finger. This signals the user that his or her finger is above the input sensor 30. The user can depress the cover 28 to thereby depress the sensor 46 and actuator 38 to depress and actuate the input sensor 30. When the user removes his or her finger, as sensed by the finger sensor 46, the controller 42 can turn the actuator 38 OFF until the user's finger is sensed again.

The software can be stored in a program storage device readable by a machine, tangibly embodying a program of instructions executable by the machine for performing operations to enhance tactile sensation to indicate location of a user input, the operations comprising sensing location of a user's finger on a cover having a haptic textured surface area above the user input; and when the location of the user's finger is sensed proximate the haptic textured surface area above the user input, vibrating the haptic textured surface area to thereby enhance the tactile sensation to the user's finger at the haptic textured surface area.

In mobile phone applications, certain sizes and orientations of piezo actuators, vibrators or vibration solenoids can be placed underneath a touch-sensitive flat display screen or cover part to give tactile and haptic feedback. This allows the use of touch screens or pads as input device instead of using conventional keypads. The tactile feedback for the input device enhances user experience by improving communication interactivity and intuitive user interface. The haptic devices, actuators, systems and features can be used as decorative elements.

A deco-functional haptics keyboard interface allows the haptics area to integrate both decorative and functional purposes. Instead of placing haptics component assemblies underneath opaque housings or displays, use of part of Haptics components as a functional decorative piece can be provided by placing them underneath transparent or translucent housings. The haptic elements, such as metallic amplifier plates for piezo actuators for example, can be used as decorative elements providing a visual metallic surface that can be plain or have graphics, such as key numbers, etched onto it.

In the deco-functional haptics interface a user can feel the locations of the keys by sliding his or her finger on the surface. Discontinuities and variations in the surface texture can be felt by the moving finger to indicate locations of functional areas such as keys. Some subtle visual cues from the reflection of light from the texture can also indicate location of keypad keys or other input elements. The lighting from below the cover can be used to change the visual perception of the input elements, thus, changing the functionality of the input area based on the needs of the software application or use context. There are several ways to create the haptic surface textures indicating the functional areas on the mobile device covers or even on the display. As a result, the textures can also be used as decorative and industrial design elements.

Amplifying the feel of texture on device covers by vibrating the surface can be provided. When the user holds his finger still the piezo element (or other vibration generator) can slightly vibrate the surface to allow the user to feel the texture although his finger is not moving. As a result the user knows his finger is on the right position for a key press. The vibration can be of constant or could vary in amplitude and/or frequency.

If the surface at a certain location on the mobile device is not textured, the vibration of the vibrating elements can be controlled in amplitude and/or frequency to generate a simulated surface texture. The device can use a capacitive or other similar touch sensitive area (that can signal coordinate locations on the cover or display) to locate the user's finger and change the vibratory feedback depending on the position the finger is pointing or touching, (e.g., soft vibration on a key hard on the edges of the key area and no vibration when the finger is not on the key). This is useful when a "hidden key" needs to be indicated haptically to the user. It is also usable when a key with a haptic cue needs to be placed on an optically restricted surface such as on the display.

A functional haptic device with a touch-sensitive area has been implemented by placing the haptic device underneath a flat surface; especially in display applications. The present invention can extend haptics applications to providing tactile feedback to other types of input devices, and can also serve as decorative purposes by using its components as a part of decoration rather than hidden components. Additionally the invention can bring the deco-haptic devices to any part of the mobile device; not just a flat surface such as the display.

With the invention, haptics in touch sensitive and touch feed back devices consists of one or both of two types of haptic elements: a passive haptics element and an active haptics element. A passive haptics element is where the covers of the devices by their shape or texture indicate the functional locations, such as the locations of keys. An active haptics element is where vibration or repetitive motion is used to jive impressions of texture or movement of the surface of the device to the users finger. This can be provided in conjunction with finger position information and press force. The third way of using haptics is using the combination of active and passive haptics in a hybrid haptic system.

A passive haptic implementation can be done by grooving the surface and creating a dynamic or disruptive change in the groove or ridge pitch, height and direction. Changing the direction of the grooves with a corner or rounded turn or through abrupt or gradual change in the height and pitch of the grooves can indicate key areas. The combination of a number of grooves and their variation can indicate to the user, moving his finger on the surface, the locations of functional areas (e.g. keys).

An active haptics implementation of the deco-functional haptic device can involve placing a capacitive sensor underneath the area where user uses his fingers for human-device interaction, such as the keypad or volume keys. The capacitive sensor can indicate the coordinates of the finger. Comparing these coordinates to the coordinate map of where the used applications keys are, the device can then vibrate the surface to hapticaly indicate the locations of keys.

Combining the two previous cases allows for the creation of a hybrid system that can also be felt without the moving of the finger on the grooves or projections. Additional functionality can be obtained by the ability to create new haptic keys with vibration on to places where the surface texture does not indicate keys to be.

Advantages of the invention include:
- Enhanced experience by improving communication interactivity and intuitive user interface.
- Simplify product design by replacing the current input device (e.g. keypad) with the haptics interface; the front housings with integrated haptics or display with integrated haptics as input/output devices can eliminate the actual input devices such as keypads.
- Reduce cost by eliminating the current input device.
- Create more freedom of design for the surface area without compromising the tactile cues for input device locating.
- Enables the creation of 'hidden keys' that can be taken into use only when the application requires.
- Enables the use of the keypad area as a keypad or touch pad.

In the past, tactile (touch) cues for key location, input devices and other elements of design have been large. There is a desire in modern design and applications to hide these elements at times or in certain designs, and bring more subtle indications of functionally active (keys, input device) areas in the covers (i.e. hidden keys that are turned on in certain applications). This can be done with actively and passively haptic/tactile textures.

New mobile devices are small in size and have several functions requiring different input and output methods and devices. The user, or the device's own software application, cannot switch between current discrete input device solutions. The solutions of this invention allow the use of a single input device (such as a capacitive touch sensor for example) as a touch pad and keypad by controlling the haptic output, but still maintaining the possibility for the user to locate keys when the device is in non-active-haptic mode.

In the past, surface texture has not been used to haptically indicate key locations, neither has active vibration been used to simulate surface texture, or to enhance the 'feeling' of surface texture by moving the surface. This invention allows the ability to provide these features.

The invention can be used to develop a series of functional textural surfaces for use with haptic touch. The aim can be to create a highly sensorial and emotional interface where the physical feedback capabilities of haptic touch can be exploited through 3D textural surface rather than the existing screen based products which use Haptic touch would allow manufactures to develop intricate covers mouldings which could replace a conventional keymat entirely and create a more human interface for this technology. Specific functional textural areas have been considered for physical input - accelerating textures addresses volume and zoom functions; navigation keys and joystick; alpha numeric keys and power. An overall textural aesthetic has been developed which can morph throughout the form factor of a product, framing and housing these areas of textural functionality.

In the embodiment shown in Figs 1 and 2, a user input system for an electronic device can be provided comprising an input actuator adapted to be depressed by a user to input a signal into the electronic device; a cover of the electronic device having a portion located over the input actuator which is adapted to be depressed inward by the user to actuate the input actuator; and a haptic actuator comprising a vibrator adapted to vibrate the portion of the cover over the input actuator. The portion can be substantially visually indiscernible by the user from surrounding portions of the cover. This can, alternatively or additionally, be used with other input sections to form a "hidden key" feature, wherein the area of the cover is only vibrated upon a predetermined event or for only a certain software application and not other software applications.

Fig. 8 shows an alternate embodiment of the exterior surface of the cover 28' at the keypad section 32'. In this embodiment, the exterior surface of the cover 28 has visually discernable indicia which includes shaped numbers, letters and symbols molded into the exterior surface generally corresponding to an ITU-T keypad. In the embodiment shown in Figs. 1 and 2, the numbers, letters and symbols could be impregnated in a different color into the cover 28 on the keypad section 32. Thus, the texture of the exterior surface of the cover 28 on the keypad section 32 could be substantially uniform.

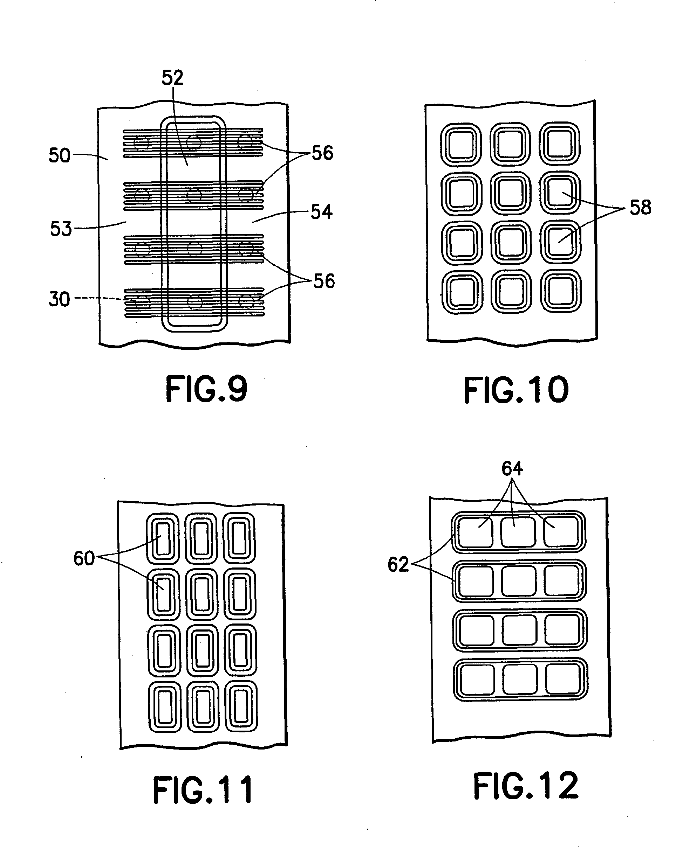

Referring also to Figs. 9-12, alternate embodiments of the shape and texture of the exterior surface of the keypad section of the cover is shown. In Fig. 9 the keypad section 50 comprises a center recessed area 52 (thus forming two adjacent relatively raised areas 53, 54) and four series of laterally extending grooves 56 which are perpendicular to the areas 52, 53, 54. The combination of area 52-54 and the four series of grooves 56 form twelve intersecting areas. Each intersecting area is located above one of the twelve input sensors 30.

Fig. 10 shows an embodiment where twelve recessed areas 58 are provided in the exterior surface of the keypad section of the cover. Each area 58 has a general square shape with multiple ridges forming the side walls to the recessed shape. Fig. 11 shows a similar embodiment, but with rectangular recessed areas 60. Fig. 12 shows another embodiment with four laterally extending recesses 62. Three raised projections 64 are located in each recess 62. This forms the twelve tactilely sensible areas over the input sensors 30 for the user to identify by touch. These are only some examples and should not be consider as being a limiting description.

Referring back to Figs. 1 and 2, the haptic features of the invention have also be applied to the navigation and function key feature 24 of the telephone 10. However, in an alternate embodiment the haptic features of the invention might not be applied to the navigation and function key feature of the device. In this embodiment a five way navigation key feature 66 is provided allowing a user to depress the feature in the center, top, bottom and two lateral sides to function similar to a joystick. The five way navigation key feature 66 comprises sensors under the cover 28 and the cover having a cross shaped recess 68 with ridges on its walls leading down to the bottom of the recess 68. This forms a clearly distinctive textured and shaped surface for a user to identify and depress the five distinctive actuation points of the five way navigation key feature 66. As seen in Fig. 2, four input sensors 30 are located under the cover 28 outside the recess 68 at the diagonal corners of the recess 68. These sensors and the cover can function as function keys. Joystick texture is echoed which naturally highlights four way keys before echoing further up the side of the product identifying volume control and power.

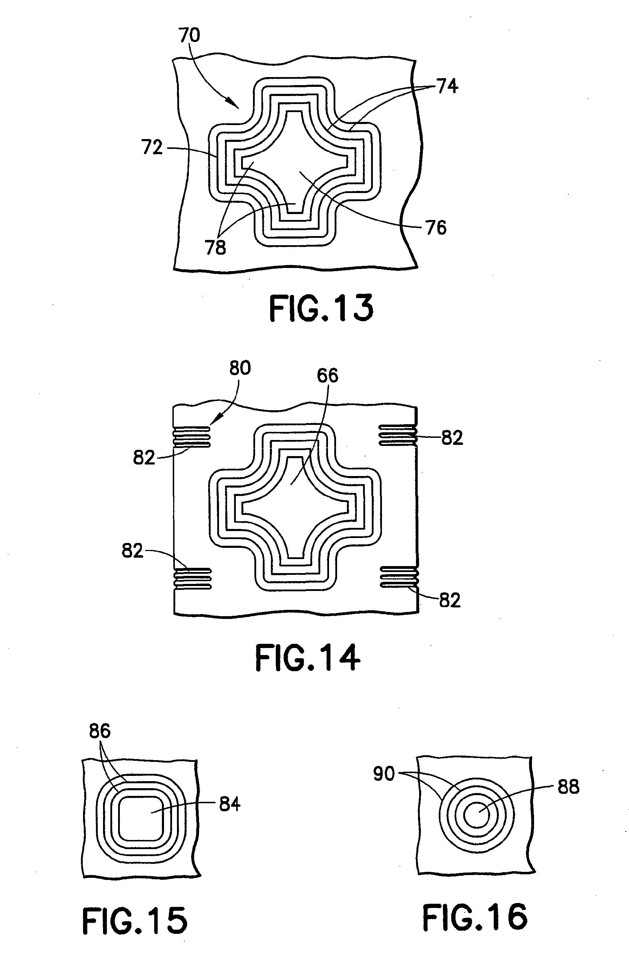

Figs. 13 and 14 show some alternative designs. For example, Fig. 13 shows an embodiment of the cover having a texture and shape providing part of a four or five way navigation key feature 70 without an associated function key feature. In this embodiment the feature 70 has a recess 72 with an inwardly declining series of ridges 74 along its walls which form a general cross shape. The center bottom of the recess 72 has an upward projection 76 having a general cross shape. The inwardly declining series of ridges 74 can signal a user by tactile sensation of the location of the four ends 78 of the cross shaped projection which can be depressed by a user.

Fig. 14 shows an embodiment of the cover having a texture and shape providing part of a four or five way navigation key feature 66 with an associated different type of function key feature 80. In this embodiment the function key feature 80 has four straight groove areas 82 into the cover at four oblique corners of the navigation key feature 66. A user input sensor is located under each of the areas 82. In this embodiment, the grooves wrap around a side edge of the front of the cover to lateral sides of the cover.

Figs. 15 and 16 show some non-limiting examples of power key features. Figs. 15 and 16 show the shape and texture of portions of the cover of the device which can be resiliently depressed inward by a user to actuate input sensors under the portions. Besides the input sensors, the devices can have the motions actuators and finger sensors similar to that described with reference to Figs. 4 and 6. In the embodiment shown in Fig. 15, the cover has a recess 84 with an inwardly declining series of stepped ridges 86 along its walls which form a general square shaped recess. In the embodiment shown in Fig. 16, the cover has a recess 88 with an inwardly declining series of stepped ridges 90 along its walls which form a general round shaped recess.

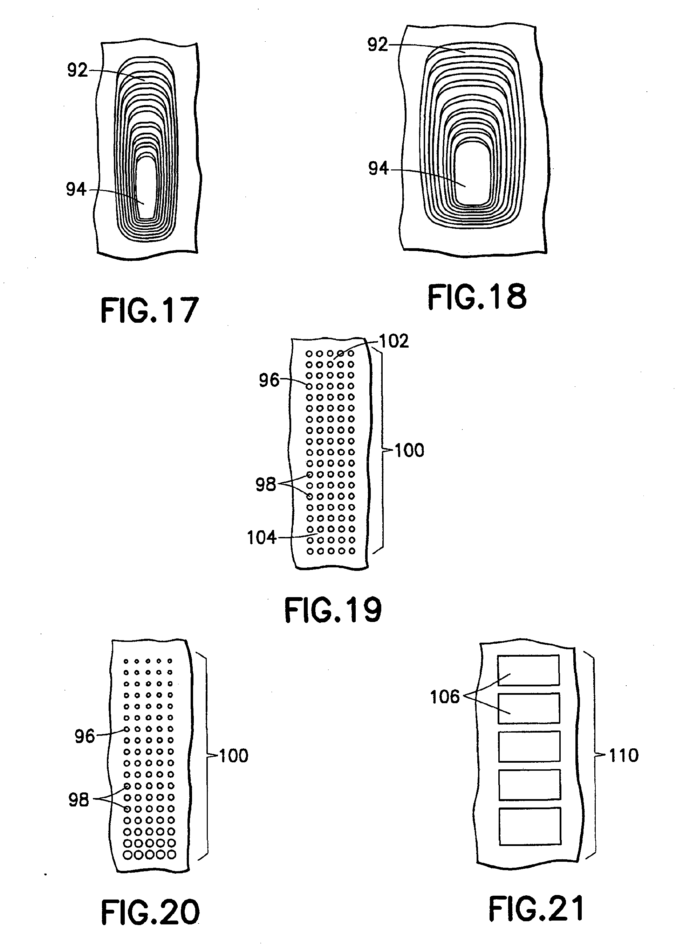

Figs. 17-27 show some non-limiting examples of volume control and/or zoom control features of the device similar to feature 22 shown in Fig 1. Figs. 17-27 show examples of the shape and texture of portions of the cover of the device which can be resiliently depressed inward by a user to actuate input sensors under the portions. Besides the input sensors, the devices can have the motions actuators and finger sensors similar to that described with reference to Figs. 4 and 6. For all of these embodiments, the amplitude and/or frequency of the vibration by the motion actuator could be different at top and bottom ends of the features. This different amplitude and/or frequency of the vibration could be preset for different positions on the longitudinal length of the features, or could be actively adjusted based upon a sensed finger position relative to the longitudinal length of the features.

The invention can provide a sense of increasing and decreasing volume control through varying intensity of texture. Figs. 17 and 18 show examples of recesses having elongated ring shaped inwardly declining series of stepped ridges along its walls which form a general rectangular and square shaped recesses, respectively. The rings in each recess are not concentrically located. This forms different textures between a bottom section 92 and a top section 94 of each recess to increase and decrease volume and/or zoom, respectively, when that section 92 or 94 is depressed by a user.

Figs. 19 and 20 show examples of dot shaped recesses or protrusions 96 arranged in a series of rows 98 along a longitudinal length 100. In Fig. 19 the dots have a uniform size, but in Fig. 20 the dots have a size which varies from small at a top end to large at a bottom end. For the embodiment shown in Fig. 19, depressing a top section 102 of the dots can increase volume or zoom and depressing a bottom section 104 can decrease volume or zoom. For the embodiment shown in Fig. 20, the size of the dots give a tactile sensation to the user to signal an increase and decrease of volume and/or zoom based upon size of the dots as well as longitudinal position of the dots.

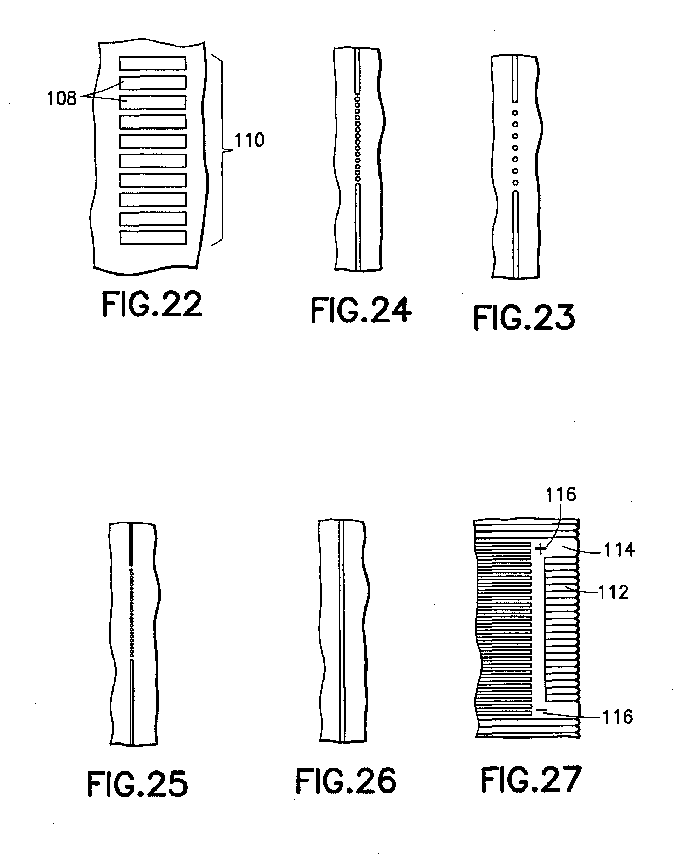

Figs. 21-22 show examples of bar shaped recesses or protrusions 106 and 108 formed in the cover arranged in a column along a longitudinal length 110. Figs. 23-25 show examples of combined longitudinal bars and dots of varying sizes formed in the cover arranged in a column along a longitudinal length as a column. Fig. 26 shows an example of a single longitudinal rib with ring shaped grooves along its length. Fig. 27 shows an example of a groove and ridge area 112 bordered by a different type of surface 114 with indicia 116.

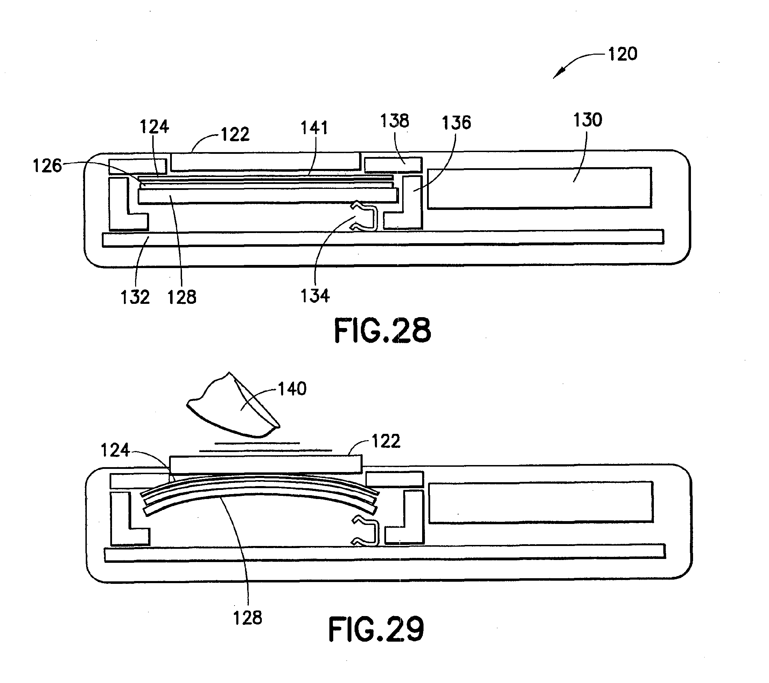

Referring now to Fig. 28, this shows an example of the device 120 having a housing with a translucent or transparent section 122, a capacitive sensor 124, an insulating layer 126 (such as a transparent plastic sheet or a non-conductive glue layer for example), a piezo actuator 128, a display 130, a printed wiring board (PWB) 132, and a multi-pin connector 134 between the PWB and the piezo actuator 128. In an alternate embodiment, the section 122 might not be translucent or transparent. Frame and cover parts 136, 138 hold the piezo actuator and the capacitive element in place. This can be done so that the piezo actuator can bulge out to hit the cover 122 for a click feedback effect. As illustrated by Fig. 29, the piezo actuator 128 can move the cover 122 outward to provide haptic feedback to location of the user's finger 140 as sensed by the capacitive sensor 124, before and/or after the cover 122 is depressed by the user's finger 140. The motion or vibration system can comprise a permanent indicium 141 on the sensor 124 or actuator 128 located beneath the window 122 which is viewable by a user through the window.

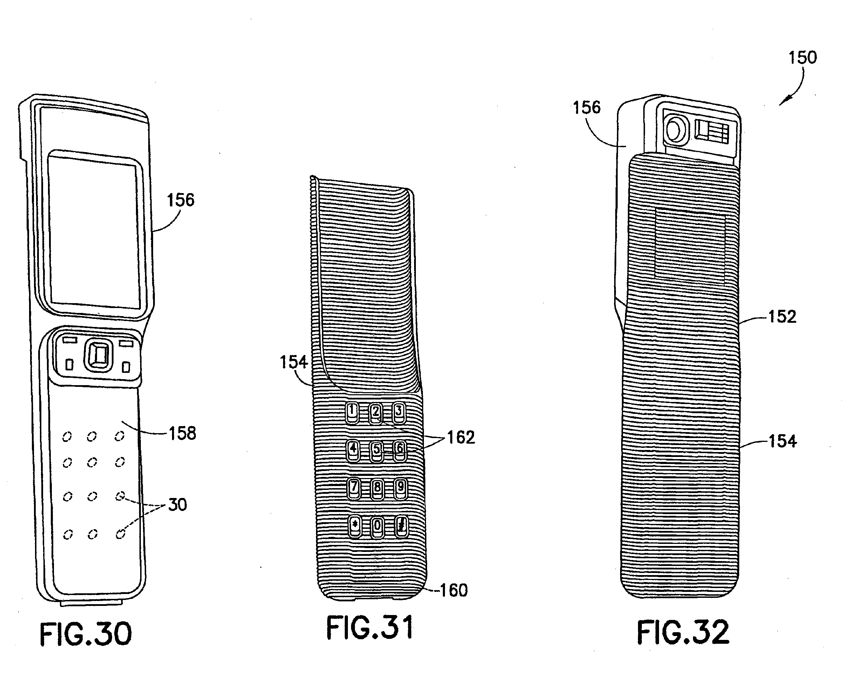

Referring now to Figs. 30-32 an alternate embodiment of the invention is shown. In this embodiment the device 150 comprises a mobile telephone substantially identical to the telephone 10 shown in Fig. 1 except that the housing 152 has a modular cover 154. The cover 154 is mounted on a main section 156 of the device having all the other working components of the device. The cover 154 is preferably a one-piece member made of resilient molded plastic or polymer material. The cover 154 is slid onto the bottom of the main section 156 and covers the keypad section 158 on the front of the main section, portions of lateral sides of the main section, and a majority of the back side of the main section. The keypad section 158 has twelve input sensors 30, and preferably one or more motion actuators and perhaps one or more finger sensors similar to the embodiments described above. The cover 154 is preferably removably mounted to the main section, such as by snap-lock sections 160 to allow a manufacturer or a user to remove the cover and replace it with a same or different cover, such as to change the color or design of the cover on the device 150. In a preferred embodiment the cover can be removed and a new cover installed without the use of tools. The material of the cover 154 is adapted to allow a user to resiliently depress textured surface key areas 162 of the cover to actuate the input sensors 30.

The embodiment shown in Figs. 30-32 illustrates that a cover for a hand-held portable electronic device can be provided comprising a haptic feedback textured surface area adapted to be located above a user depressible input actuator of the hand-held portable electronic device, wherein the textured surface area is adapted to be depressed by a user to actuate the user depressible input actuator and thereby input a signal into the electronic device, wherein the textured surface area has an aesthetic design shape observable by a user; and a system for removably mounting the cover to a main section of the hand-held portable electronic device, wherein the main section of the hand-held portable electronic device is adapted to have one of a plurality of different covers, having different shaped haptic feedback textured surface areas, mounted thereto such that the cover is adapted to replace a different cover on the main section of the hand-held portable electronic device having a different shaped haptic feedback textured surface area. The system for removably mounting the cover to the main section can be adapted to removably mount the cover to the main section such that the cover can be removed without a tool.

The embodiment shown in Figs. 30-32 illustrates that a cover for a hand-held portable electronic device can be provided comprising a system for attaching the cover to a main section of the hand-held portable electronic device to thereby cover a user depressible input actuator on the main section which is adapted to input a signal into the hand-held portable electronic device when the user input actuator is depressed by a user; and a haptic textured surface on an exterior side of the cover which is adapted to be located over the user input actuator, wherein the haptic textured surface comprises a series of symmetrical grooves and/or projections around and/or directly over the user input actuator which is adapted to be felt by touch of the user to indicate location of the user input actuator, and wherein the series of symmetrical grooves and/or projections form an aesthetic design which is viewable by the user. The cover could be made of a recyclable material.

In an alternate embodiment, features of the invention could be used under a touch screen, such as providing a vibratory sensation to the touch screen. The invention could also be used with a non-textured surface, such as with a touch screen for example or a flat surface of the housing cover.

It should be understood that the foregoing description is only illustrative of the invention. Various alternatives and modifications can be devised by those skilled in the art without departing from the invention. Accordingly, the invention is intended to embrace all such alternatives, modifications and variances which fall within the scope of the appended claims.

## Claims

1. A user input system for an electronic device comprising:
an input actuator (30) adapted to be depressed by a user to input a signal into the electronic device;
an actuator location signaling system adapted to signal location of the input actuator to the user, wherein the actuator location signaling system comprises a textured surface (28) proximate the input actuator for a finger of the user to contact, and a system (38) for moving the textured surface to enhance sensory input to the user's finger while contacting the textured surface, wherein the system for moving the textured surface is arranged above the input actuator; and
a system (46) for sensing location of the user's finger proximate the textured surface, wherein the system for moving is adapted to move the textured surface based, at least partially, upon a sensed location of the user's finger.

2. A user input system as in claim 1 wherein the textured surface comprises progressively increasing or decreasing ring shaped ridges.

3. A user input system as in claim 2 wherein the progressively increasing or decreasing ring shaped ridges are concentrically located relative to each other.

4. A user input system as in claim 2 wherein the progressively increasing or decreasing ring shaped ridges have a non-circular shape.

5. A user input system as in claim 2 wherein the progressively increasing or decreasing ring shaped ridges are located one within another.

6. A user input system as in claim 1 wherein the textured surface comprises progressively increasing or decreasing projections or grooves along a linear straight path.

7. A user input system as in claim 1 wherein the system for moving comprises a vibration system for vibrating a cover of the electronic device relative to a main section of the electronic device.

8. A user input system as in claim 7 wherein the vibration system comprises means for varying the amplitude and/or frequency of vibration of the textured surface.

9. An electronic device comprising:
a housing adapted to be held in a hand of a user;
an electronic display on the housing; and
a user input system as in claim 1 on the housing, wherein the textured surface is on an exterior surface of a cover of the housing.

10. A method of signaling a user of an electronic device of a location of a user input on the electronic device, the method comprising:
providing the electronic device with a textured surface (28) proximate an input actuator (30) configured to receive the user input, the textured surface being adapted to be depressed by a user to input a signal into the electronic device via the input actuator;
sensing a location of a user's finger proximate the textured surface using a system (46) for sensing a location of the user's finger; and
providing a system (38) above the input actuator configured to move the textured surface to enhance sensory input of the textured surface to the user while the user is touching the textured surface based, at least partially, upon the sensed location of the user's finger.

11. A method as in claim 10 wherein providing the electronic device with a textured surface comprises providing the electronic device with a removable cover having the textured surface thereon.

12. A method as in claim 10 wherein moving the textured surface comprises vibrating the textured surface, and changing amplitude and/or frequency of the vibration based upon a sensed location of a finger of the user relative to the textured surface.

13. A method as in claim 10 further comprising sensing a location of a user's finger relative to the textured surface, wherein moving the textured surface is based, at least partially, upon the sensed location of the user's finger.

14. A program storage device readable by a machine, tangibly embodying a program of instructions executable by the machine for performing operations to enhance tactile sensation to indicate location of a user input received by an input actuator (30), the operations comprising:
sensing a location of a user's finger proximate a haptic textured surface arranged above the input actuator using a system (46) for sensing a location of the user's finger proximate the textured surface; and
when the location of the user's finger is sensed proximate the haptic textured surface (28) above the input actuator using the system for sensing a location of the user's finger proximate the textured surface, vibrating the haptic textured surface using a system (38) for moving the textured surface to thereby enhance the tactile sensation to the user's finger at the haptic textured surface, wherein the system for moving the textured surface is arranged above the input actuator.

## Patentansprüche

1. Benutzereingabesystem für eine elektronische Vorrichtung, aufweisend:
einen Eingabeauslöser (30), der dazu ausgebildet ist, von einem Benutzer zur Eingabe eines Signals in die elektronische Vorrichtung gedrückt zu werden;
ein Auslöserpositionssignalisierungssystem, das zum Signalisieren der Position des Eingabeauslösers an den Benutzer ausgebildet ist, wobei das Auslöserpositionssignalisierungssystem eine texturierte Oberfläche (28) nahe dem Eingabeauslöser für einen Kontakt mit dem Finger des Benutzers aufweist, und ein System (38) zum Bewegen der texturierten Oberfläche zur Verstärkung einer sensorischen Eingabe für den Finger des Benutzers, während dieser mit der texturierten Oberfläche in Kontakt steht, wobei das System zum Bewegen der texturierten Oberfläche über dem Eingabeauslöser angeordnet ist; und
ein System (46) zum Erfassen der Position des Fingers des Benutzers nahe der texturierten Oberfläche, wobei das System zum Bewegen dazu ausgebildet ist, die texturierte Oberfläche zumindest teilweise auf der Grundlage einer erfassten Position des Fingers des Benutzers zu bewegen.

2. Benutzereingabesystem nach Anspruch 1, wobei die texturierte Oberfläche zunehmend ansteigende oder abfallende ringförmige Stege aufweist.

3. Benutzereingabesystem nach Anspruch 2, wobei die zunehmend ansteigenden oder abfallenden ringförmigen Stege konzentrisch relativ zueinander angeordnet sind.

4. Benutzereingabesystem nach Anspruch 2, wobei die zunehmend ansteigenden oder abfallenden ringförmigen Stege eine nicht kreisförmige Form aufweisen.

5. Benutzereingabesystem nach Anspruch 2, wobei die zunehmend ansteigenden oder abfallenden ringförmigen Stege ineinander liegen.

6. Benutzereingabesystem nach Anspruch 1, wobei die texturierte Oberfläche zunehmend ansteigende oder abfallende Vorsprünge oder Rillen entlang eines linearen geraden Pfades aufweist.

7. Benutzereingabesystem nach Anspruch 1, wobei das System zum Bewegen ein Vibrationssystem zum Vibrieren eines Deckels der elektronischen Vorrichtung relativ zu einem Hauptabschnitt der elektronischen Vorrichtung aufweist.

8. Benutzereingabesystem nach Anspruch 7, wobei das Vibrationssystem Mittel zum Variieren der Amplitude und/oder Frequenz einer Vibration der texturierten Oberfläche aufweist.

9. Elektronische Vorrichtung, aufweisend:
ein Gehäuse, das dazu ausgebildet ist, in einer Hand eines Benutzers gehalten zu werden;
eine elektronische Anzeige an dem Gehäuse; und
ein Benutzereingabesystem nach Anspruch 1 auf dem Gehäuse, wobei sich die texturierte Oberfläche an einer Außenfläche eines Deckels des Gehäuses befindet.

10. Verfahren zum Signalisieren eines Benutzers einer elektronischen Vorrichtung einer Position einer Benutzereingabe an der elektronischen Vorrichtung, wobei das Verfahren aufweist:
Versehen der elektronischen Vorrichtung mit einer texturierten Oberfläche (28) nahe einem Eingabeauslöser (30), die zum Empfangen der Benutzereingabe konfiguriert ist, wobei die texturierte Oberfläche dazu ausgebildet ist, von einem Benutzer zur Eingabe eines Signals in die elektronische Vorrichtung über den Eingabeauslöser gedrückt zu werden;
Erfassen einer Position eines Fingers eines Benutzers nahe der texturierten Oberfläche mit einem System (46) zum Erfassen einer Position des Fingers des Benutzers; und
Vorsehen eines Systems (38) über dem Eingabeauslöser, das zum Bewegen der texturierten Oberfläche konfiguriert ist, um die sensorische Eingabe der texturierten Oberfläche für den Benutzer zumindest teilweise auf Grundlage der erfassten Position des Fingers des Benutzers zu verstärken, während der Benutzer die texturierte Oberfläche berührt.

11. Verfahren nach Anspruch 10, wobei das Versehen der elektronischen Vorrichtung mit einer texturierten Oberfläche das Versehen der elektronischen Vorrichtung mit einem entfernbaren Deckel aufweist, auf dem sich die texturierte Oberfläche befindet.

12. Verfahren nach Anspruch 10, wobei das Bewegen der texturierten Oberfläche das Vibrieren der texturierten Oberfläche und Ändern einer Amplitude und/oder Frequenz der Vibration auf Grundlage einer erfassten Position eines Fingers des Benutzers relativ zu der texturierten Oberfläche aufweist.

13. Verfahren nach Anspruch 10, des Weiteren aufweisend das Erfassen einer Position eines Fingers eines Benutzers relativ zu der texturierten Oberfläche, wobei das Bewegen der texturierten Oberfläche zumindest teilweise auf der erfassten Position eines Fingers des Benutzers beruht.

14. Programmspeichervorrichtung, die von einer Maschine lesbar ist, die konkret ein Programm von Anweisungen verkörpert, das von der Maschine ausführbar ist, um Operationen zur Tastsinnverstärkung auszuführen, um eine Position einer Benutzereingabe anzuzeigen, die von einem Eingabeauslöser (30) empfangen wird, wobei die Operationen aufweisen:
Erfassen einer Position eines Fingers eines Benutzers nahe einer haptischen texturierten Oberfläche, die über dem Eingabeauslöser angeordnet ist, unter Verwendung eines Systems (46) zum Erfassen einer Position des Fingers des Benutzers nahe der texturierten Oberfläche; und
wenn die Position des Fingers des Benutzers nahe der haptischen texturierten Oberfläche (28) über dem Eingabeauslöser unter Verwendung des Systems zum Erfassen einer Position des Fingers des Benutzers nahe der texturierten Oberfläche erfasst wird, Vibrieren der haptischen texturierten Oberfläche mit einem System (38) zum Bewegen der texturierten Oberfläche, um dadurch den Tastsinn des Fingers des Benutzers an der haptischen texturierten Oberfläche zu verstärken, wobei das System zum Bewegen der texturierten Oberfläche über dem Eingabeauslöser angeordnet ist.

## Revendications

1. Système d'entrée d'utilisateur pour dispositif électronique comprenant :
un actionneur d'entrée (30) adapté pour être enfoncé par un utilisateur pour entrer un signal dans le dispositif électronique ;
un système de signalisation de position d'actionneur adapté pour signaler à l'utilisateur la position de l'actionneur d'entrée, le système de signalisation de position d'actionneur comprenant une surface texturée (28) proche de l'actionneur d'entrée destinée au contact par un doigt de l'utilisateur, et un système (38) pour déplacer la surface texturée afin de rehausser l'entrée sensorielle du doigt de l'utilisateur au contact de la surface texturée, le système pour déplacer la surface texturée étant agencé au-dessus de l'actionneur d'entrée ; et
un système (46) pour détecter la position du doigt de l'utilisateur près de la surface texturée, le système de déplacement étant adapté pour déplacer la surface texturée en fonction, au moins en partie, d'un emplacement détecté du doigt de l'utilisateur.

2. Système d'entrée d'utilisateur selon la revendication 1, dans lequel la surface texturée comprend des nervures de forme annulaire augmentant ou diminuant progressivement.

3. Système d'entrée d'utilisateur selon la revendication 2, dans lequel les nervures de forme annulaire augmentant ou diminuant progressivement sont situées concentriquement les unes par rapport aux autres.

4. Système d'entrée d'utilisateur selon la revendication 2, dans lequel les nervures de forme annulaire augmentant ou diminuant progressivement ont une forme non circulaire.

5. Système d'entrée d'utilisateur selon la revendication 2, dans lequel les nervures de forme annulaire augmentant ou diminuant progressivement sont situées les unes dans les autres.

6. Système d'entrée d'utilisateur selon la revendication 1, dans lequel la surface texturée comprend des protubérances ou rainures augmentant ou diminuant progressivement le long d'un chemin rectiligne linéaire.

7. Système d'entrée d'utilisateur selon la revendication 1, dans lequel le système de déplacement comprend un système de vibration pour faire vibrer un couvercle du dispositif électronique par rapport à une section principale du dispositif électronique.

8. Système d'entrée d'utilisateur selon la revendication 7, dans lequel le système de vibration comprend un moyen pour faire varier l'amplitude et/ou la fréquence de vibration de la surface texturée.

9. Dispositif électronique comprenant :
un boîtier adapté pour être tenu dans la main d'un utilisateur ;
un afficheur électronique sur le boîtier ; et
un système d'entrée d'utilisateur selon la revendication 1 sur le boîtier, dans lequel la surface texturée se trouve sur une surface extérieure d'un couvercle du boîtier.

10. Procédé de signalisation à un utilisateur d'un dispositif électronique d'une position d'une entrée d'utilisateur sur le dispositif électronique, le procédé comprenant :
l'agencement sur le dispositif électronique d'une surface texturée (28) près d'un actionneur d'entrée (30) configurée pour recevoir l'entrée d'utilisateur, la surface texturée étant adaptée pour être enfoncée par un utilisateur pour entrer un signal dans le dispositif électronique par l'intermédiaire de l'actionneur d'entrée ;
la détection d'une position d'un doigt de l'utilisateur près de la surface texturée au moyen d'un système (46) pour détecter une position du doigt de l'utilisateur ; et
la fourniture d'un système (38) par-dessus l'actionneur d'entrée configuré pour déplacer la surface texturée afin de rehausser l'entrée sensorielle de la surface texturée pour l'utilisateur lorsque l'utilisateur touche la surface texturée en fonction, au moins en partie, de la position détectée du doigt de l'utilisateur.

11. Procédé selon la revendication 10, dans lequel l'aménagement sur le dispositif électronique d'une surface texturée comprend la fourniture au dispositif électronique d'un couvercle amovible comportant la surface texturée.

12. Procédé selon la revendication 10, dans lequel la surface texturée comprend la vibration de la surface texturée, et le changement de l'amplitude et/ou de la fréquence de la vibration en fonction d'une position détectée d'un doigt de l'utilisateur par rapport à la surface texturée.

13. Procédé selon la revendication 10, comprenant en outre la détection d'un emplacement d'un doigt d'utilisateur par rapport à la surface texturée, dans lequel le déplacement de la surface texturée est fonction, au moins en partie, de la position détectée du doigt de l'utilisateur.

14. Dispositif de mémorisation de programme lisible par une machine mettant en oeuvre concrètement un programme d'instructions exécutable par la machine pour exécuter des opérations afin de rehausser une sensation tactile pour indiquer la position d'une entrée d'utilisateur reçue par un actionneur d'entrée (30), les opérations comprenant :
la détection d'une position d'un doigt d'un utilisateur près d'une surface texturée haptique agencée au-dessus de l'actionneur d'entrée en utilisant un système (46) de détection d'une position du doigt de l'utilisateur près de la surface texturée ; et
quand la position du doigt de l'utilisateur est détectée près de la surface texturée haptique (28) au-dessus de l'actionneur d'entrée en utilisant le système de détection d'une position du doigt d'utilisateur près de la surface texturée, la vibration de la surface texturée haptique au moyen d'un système (38) de déplacement de la surface texturée pour ainsi rehausser la sensation tactile par le doigt de l'utilisateur au niveau de la surface texturée haptique, dans lequel le système de déplacement de la surface texturée est agencé au-dessus de l'actionneur d'entrée.
